# EUROPEAN PATENT APPLICATION

(11) **EP 4 109 076 A1**
(43) Date of publication of application: **28.12.2022**
(21) Application number: 21180791.2
(22) Date of filing: 22.06.2021
(51) Int. Cl.: G01N 21/45

(54) **AN APPARATUS FOR OBTAINING AN IMAGE OF A SAMPLE AND METHODS FOR GENERATING AN IMAGE OF A SAMPLE**

(71) Applicant: Danmarks Tekniske Universitet, 2800 Kongens Lyngby (DK)
(72) Inventor: KROMANN, Emil B., 2800 Kgs. Lyngby (DK); SAMS, Thomas, 2800 Kgs. Lyngby (DK); JANOWSKI, Patrick, 2800 Kgs. Lyngby (DK)
(74) Representative: Zacco Denmark A/S

(57) **Abstract**

The disclosure relates to an apparatus for obtaining an image of a sample (104), the apparatus comprising a first and a second electromagnetic radiation beam, beams-managing elements for phase-modulating, guiding and directing the two beams onto the sample (104), and at least one detector (130). The beams-managing elements are arranged such that the two beams create a plurality of spatially oscillating interference patterns (132) and project them onto the sample (104). Each of the plurality of spatially oscillating interference patterns (132) results in a corresponding output signal detected by the detector (130). Finally, the image based on the plurality of the output signals is generated. The disclosure further relates to methods for generating an image of a sample.

## Description

### Technical field

The present disclosure relates to an apparatus for obtaining an image of a sample and methods for generating an image of a sample. More specifically, the disclosure relates to an apparatus for obtaining an image of a sample and methods for generating an image of a sample as defined in the introductory parts of claim 1, claim 15 and claim 16.

### Background art

Bio-imaging of living systems spans samples of sizes ranging from whole humans to individual cells or even cell-constituents like vesicles or organelles.

In the smaller end of this size spectrum, vesicles and individual cells are often imaged in isolation on glass substrates or in liquid suspension, both of which can allow fast screening/characterization of sample morphology either with high-throughput microscopy techniques or novel imaging flow cytometers. For this type of sample, imaging throughput (imaging speed) is key to reaching statistically sound conclusions about phenotypes present in the sample. Likewise, throughput is key to identifying rare phenotypes, e.g., a single cancer cell among many healthy cells. To improve the applications of these samples in research/clinic/industry, there is a current need to increase imaging speed/throughput, for high-throughput imaging technologies.

In a larger size spectrum, intact/excised tissues or very small animals like zebrafish present an opportunity to study cell-cell interactions and structure-function relationships in biology. Likewise, novel organ-on-a-chip systems are emerging as a groundbreaking technology for bioresearch and personalized medicine. By mimicking real tissues in highly controlled environments, this new biological sample can revolutionize high throughput screening of, for example, person- and organ-specific drug responses - ultimately enabling more efficient treatment of disease and a new avenue to explore biology in its near-native state. Organ-on-a-chip systems mimic the natural, highly regulated, spatial organization of different cell types in a portable chip-format which fits under a microscope objective. Hence, organ-on-a-chip systems should allow us to observe how an organ, its constituent cells, and their subcellular components function under normal conditions, and how they respond structurally to external perturbations, e.g., a new drug. However, traditional microscale bio-imaging tools are poorly suited to screen increasingly complex organ-on-a-chip systems. As these organ-on-a-chip systems grow more complex, they begin to adopt the imaging-challenges that are already associated with other specimens like intact/excised tissues and small animals. Current limitations for imaging such complex samples are: limited imaging speed, photo-toxicity (light-induced cell damage) during long-term imaging, and sample-induced optical aberrations (light path distortions), which blur the image. Additionally, the near-exclusive use of fluorescence for imaging these samples prevent accidental discoveries, as fluorescent markers primarily label known structures targeted by the user.

In an even larger size spectrum, (medical) imaging of larger 'samples' such as patients or larger animals necessitates probing methods, which do not rely on light in the near-visible spectrum, as this type of radiation does not penetrate these very thick samples. In these cases, it is relevant to work with electromagnetic radiation of other wavelengths. Generally, existing medical imaging systems and large-sample imaging systems are very costly and complex. There is a need for imaging systems which are cheaper and simpler than existing tools.

Thus, there is a need for an improved imaging system and imaging methods to overcome limitations of currently known systems and methods. By addressing the presented needs, which are specific to bio-imaging applications, resulting imaging technologies can readily find application for imaging of other, non-biological, specimens.

### Summary

It is an object of the present disclosure to mitigate, alleviate or eliminate the above-identified limitations in the prior art. Therefore, it is an object of the present invention to provide an imaging apparatus and a method with an improved imaging speed. It is a further object of the present invention to provide an imaging apparatus and a method which is less susceptible to image distortions. It is a yet further object of the present invention to shorten the imaging process while ensuring a good quality of the obtained image. It is also an object of the present invention to utilize various types of electromagnetic radiation and various types of radiation resulting from the sample being imaged. It is an object of the invention to provide a system of a reduced complexity and cost.

In order to eliminate the above mentioned limitations, the present invention proposes an imaging apparatus and methods for screening samples, including biological particles (e.g., cells or vesicles) in biofluids (e.g., blood or saliva), isolated biological cells, and more complex structures (e.g., organ-on-a-chip systems, intact tissues, or whole animals/patients). The present invention provides the foundation for a groundbreaking new method to study how cells respond to, e.g., a medicine. The presented invention may also be readily employed for imaging of other, non-biological, samples. A range of potential applications in biological research and in the clinic is vast, one immediate application would be the development of personalized medicine.

According to a first aspect there is provided an apparatus for obtaining an image of a sample, the apparatus comprising:
- a first and a second electromagnetic radiation beam;
- beams-managing elements configured to guide the two electromagnetic radiation beams and to direct them onto the sample;
the beams-managing elements being arranged such that the two electromagnetic (EM) radiation beams create a spatially oscillating interference pattern at the sample;
- at least one detector configured to detect an output signal emitted from the sample;
wherein the apparatus is configured for projecting a plurality of spatially oscillating interference patterns onto the sample by repositioning and/or phase-shifting the first and/or the second electromagnetic radiation beam with respect to each other, and wherein each of the plurality of spatially oscillating interference patterns results in a corresponding output signal, and wherein the apparatus is configured for obtaining the image based on the plurality of the output signals.

The obtained image may be a two-dimensional (2D) image, as well as three-dimensional (3D) image. Depending on the desired image type, the beams-managing elements may be implemented differently.

The sample may be a complex, multicellular, living biological sample comprising various types of cells, such as blood cells, muscle cells, stem cells, fat cells, as well as cancer cells. It is particularly beneficial to image, identify, and isolate undesired cells that may appear in the sample under imaging.

The first and second beams may be light beams, X-ray beams, microwave beams, radio-wave beams, or the like. The two beams may be coherent and have the same or nearly the same frequency. Having an apparatus suitable for a wide range of electromagnetic waves is advantageous as the apparatus can be utilized in a wide range of applications, such as medical imaging.

Beams-managing elements may be arranged in a number of different ways and may comprise different elements suitable for the EM radiation used for the imaging. If the beams are light beams, the beams-managing elements may comprise mirrors, splitters, polarizers, objectives, pinholes, apertures, phase-retarders, and similar. This includes active elements for beam deflection (e.g. scanning-mirrors, acousto-optic deflectors, electro-optic deflectors), amplitude modulation (e.g. acousto-optic tunable filters or modulators, electro-optic modulators), phase-modulation (e.g. piezo-mounted mirrors, electro-optic phase modulators), and the like. Phase modulation may also be performed by adjusting the relative phase of emitted radiation between two EM sources, in embodiments where two or more EM sources are used. At least one beams-managing element may have one spatial or phase-modulating degree of freedom in order to appropriately guide the beams onto the sample and in order to create more than one interference pattern onto the sample. Having one beam-managing element with a spatial or phase-modulating degree of freedom it is possible to generate a plurality of interference patterns onto the sample. Beams-managing elements also allow for a use of a single source which can then be split into as many beams as needed. This makes the apparatus cheaper for implementation. Also, as the managing elements can be controlled electronically, the speed of imaging using the apparatus of the present invention is improved.

A spatially oscillating interference pattern may be a sinusoidal interference pattern. The pattern is generated through interference by superposing the two EM radiation beams. The use of such a pattern is beneficial because each pattern probes a large volume of sample-space with every exposure. The pattern may have a larger amplitude compared to the individual beams. Utilizing a plurality of interference patterns and regenerating an image based on these patterns improves quality of the image and generally, reduces image distortions. Near the intersection point of the two beams, the intensity of the interference pattern is constant along one axis, which is defined by the half-angle between the two intersecting beams. Hence, as the pattern remains constant (well defined, and well-focused) along this axis, it is possible to reconstruct a 2D projection of the sample, effectively removing out-of-focus blurring. Following the same logic, it is also possible to reconstruct a 3D model of the sample.

A selection of the at least one detector may depend on the selection of the EM radiation beam. If, for instance, the beams are light beams, the detector is a photodetector. By using a simple detector, a complexity and cost of the apparatus is drastically decreased and in particular compared to state-of-the-art systems which typically use expensive and complex cameras or camera systems.

Each of the plurality of spatially oscillating interference patterns may interact with the sample and cells in the sample and thereby results in a corresponding output signal, generated through scattering, reflection, fluorescence, other forms of radiation, or the like. This includes radiation arising from non-linear interactions between the probing radiation and the sample, these non-linear interactions include multi-photon excitation, Raman-effects, heating of the sample, and the like. The plurality of patterns may be generated sequentially, one after another. Also, several patterns may be generated simultaneously, and projected at different positions of the sample (e.g. at different positions in/on the sample, or at different positions along the trajectory of motion of the sample).

The image is obtained based on the plurality of the output signals and the input patterns. Since the input patterns are known and based on the repositioning and/or phase-modulation of the beams, only one or more detectors may be required for image reconstruction. There is no need for careful focusing of the signal from the sample or thorough calibration or cameras. This is advantageous as the apparatus is simpler and less expensive compared to the state-of-the art systems. Also, single detectors have faster response and therefore the apparatus offers imaging with an improved speed compared to the systems which use cameras. An improved imaging speed leads to shorter imaging process. Also, single detectors exist in more variants, which makes it more feasible to image at wavelengths where corresponding cameras are not readily available or prohibitively costly. The apparatus of the present invention thereby provides faster imaging and improved image quality compared to the state-of-the-art set-ups.

According to some embodiments, the first and the second beam may be generated by splitting electromagnetic radiation from a single source, or by two identical sources of electromagnetic radiation. The source may be a coherent X-ray source. The source may be a laser, preferably a monochromatic laser. The source may also be selected from any other sources of electromagnetic radiation beyond light and lasers and those aforementioned. The beams may be generated by splitting any of the mentioned sources by an appropriate element, such as a beam splitter. One source beam may be split into a plurality of beams to thereby generate several interference patters simultaneously. Using one single source for generating multiple beams reduces cost of the apparatus and makes it simpler. The first and second beam may be generated from two identical sources of radiation (e.g. two monochromatic lasers that are synchronized in time).

According to some embodiments, the spatially oscillating interference patterns may differ from each other in at least one parameter, the parameter being selected from a list of spatial frequency, phase, amplitude, and orientation in space, i.e. a direction of interference patterns. The two EM beams interfere to imprint well-defined light patterns on the sample. Beams-managing elements, e.g. moving/rotating mirrors driven by a predefined voltage, in the apparatus may deflect and phase-delay the two beams, thus changing their angles and relative phase. Consequently, these managing elements allow to imprint interference patterns with varying direction, frequency, and phase onto the sample. Beam-managing elements (e.g. acousto-optic modulators) may be used to modulate the amplitude (or intensity) of the spatially oscillating interference pattern. The frequency, phase, direction, and amplitude of the spatially oscillating interference pattern may depend on the parameters of the original beams (phase, frequency, amplitude, direction) and their relation to each other, e.g., the relative phase-difference between the beams, which may be controlled by voltages applied onto moving mirrors or electro-optic modulators (or the like) associated with one or both beams. Having several degrees of freedom for the interference patterns increases the number of patterns that can be created. The more different pattern are imprinted onto the sample the better the quality of the image will be. To increase imaging efficiency, it can be advantageous to imprint patterns which are orthogonal to each other in a mathematical sense.

According to some embodiments, the at least one detector is a single element detector. The single element detector typically detects the output signal generated by one interference pattern at a time.

According to some embodiments, the image may be a two-dimensional projection or a three-dimensional reconstruction. Comparing to the acquisition of a two-dimensional projection, 3D imaging necessitates a larger number of patterns to be projected onto the sample. Typically this requires some additional beam-managing elements, such as additional objectives, detectors, and/or beam splitters, or beam multipliers. 3D imaging may also be performed through tomographic image acquisition, by rotating the sample or the imaging setup while continuously capturing 2D-projection images of the sample from different orientations.

According to some embodiments, the apparatus may be configured for sending the detected signals to a signal processing unit. The signal processing unit may be in the form of a personal device, such as a smart phone, tablet, computer, or the like. The at least one detector may send the obtained signal to the signal processing unit. Also, the signal processing unit may obtain information on the interference patterns imprinted onto the sample. Based on the imprinted signals and the obtained signals for each corresponding pattern, the processing unit may reconstruct the image. The signal processing unit may be configured for reconstructing the image by use of Fourier theory. Namely, the image reconstruction draws on the concept of a Fourier transformation as any signal can be represented as a sum of sinusoids with varying frequency, phase, and amplitude. Accordingly, any 2D image can be constructed from a series of 2D sinusoids.

In one example, when the EM radiation beam is, e.g. light, it is possible to probe the signal abundance in each of the 2D sinusoids by exposing the sample to laser light with corresponding sinusoidal patterns, i.e. interference patterns formed by two intersecting beams of coherent light. An advantage of such image reconstruction is a rapid detection of fluorescence for all sinusoidal patterns using a single element detector, rather than a camera, and then reconstructing an image of the sample in a process much akin to an inverse Fourier transformation. To estimate the amplitude and phase of a given Fourier-component (sinusoidal pattern) in a sample, the signal from four patterns may be captured. These patterns may be phase shifted in steps of 90-degrees relative to each other. The concept of generating a 2D image (using sinusoidal probe patterns that oscillate in two dimensions) can be expanded for 3D imaging by adding a degree of directional freedom to the sinusoidal probe patterns.

According to some embodiments, the signal processing unit may be configured for reconstructing the image by leveraging that the weight of a spatially oscillating interference pattern across the sample is determined by subtracting 'a' from 'b', where 'a' is the signal acquired from one spatially oscillating interference pattern, and 'b' is the signal acquired from a similar, but 180-degree (pi radians) phase-shifted, spatially oscillating interference pattern, or from a similar, approximately the 180-degree (pi radians) phase-shifted sinusoidal pattern. Through this operation, any constant signal offset is removed, and the result ('a' minus 'b') may be used as the weight (abundance, magnitude, or power equivalent) of the sinusoid during image reconstruction. A constant signal offset will almost always be present, as the intensity of the interference pattern of electromagnetic radiation (which typically defines the magnitude of the output signal) is positive by definition. Hence, the ideal interference pattern will typically oscillate between an intensity of zero (in practice, near-zero) and a larger (positive) intensity. Mathematically, the intensity profile will corresponds to a sinusoid plus an offset. Through the subtraction-method outlined here, the signal-contribution from the constant offset may be removed. Similar signal offsets may also arise from (for example) scattered radiation from the sample or imaging system in areas outside the probe volume, i.e., in areas where the beams are not intersecting. As the resulting signal-contribution from this scattered radiation will be insensitive to the 180-degree phase-shift in an isolated beam, the signal-contribution will remain constant upon a 180-degree phase shift, thus allowing to suppress this signal contribution through the subtraction method outlined above, or through another operation following similar logic. This includes methods in which the phase of the spatially oscillating interference pattern is swept through more (or fewer) than 4 readout positions, for example, the phase may be swept from 0 to 360 degrees, following (for example) a continuous saw-tooth pattern, while the resulting signal from the sample is read out continuously.

According to some embodiments, the apparatus may comprise a line-array of detectors configured to capture output signals along one imaging axis, thus increasing imaging speed. The apparatus may also comprise a multitude of detectors, configured to detect accumulated output signals emitted from the sample. The detector type may depend on the used electromagnetic radiation beam and the resulting output radiation (signal). In the case of output radiation in the light regime the detector is a photodetector. It is an advantage to use multiple detectors to thereby increase the acquired signal. Also, multiple detectors may be used to capture different kinds of signal, e.g. scattered signals or reflected signals. In the case of light beams, different photodetectors may be used to capture, e.g., fluorescence at different wavelengths and/or scattered light, including forward- and side-scattered light.

According to some embodiments, each of the plurality of spatially oscillating interference patterns may be arranged to overlap at a stationary image position. The repositioning and/or phase-modulation of the beams-managing elements may change an overlap angle and/or relative phase between the first and/or the second electromagnetic radiation beam at the stationary image position, thereby creating the plurality of interference patterns at the stationary image position.

According to some embodiments, the sample may be arranged to move while the plurality of spatially oscillating interference patterns are applied thereto. The sample may be flowing, as in a flow cytometer or microfluidic channel. The sample may be translated, for example by a mechanical stage or conveyor-belt. The patterns may be applied sequentially and/or simultaneously, while the sample moves. Having the sample moving during imaging may increase the imaging speed and enable parallel imaging of multiple samples. For example, a particle (e.g. a cell) may travel through a series of patterns positioned along the length of a capillary in a flow cytometer, while a signal is read out from each pattern by a separate detector. In this setup, multiple particles can travel through the capillary simultaneously. The same pipelining-methodology can be applicable for imaging samples on a mechanical stage or conveyor belt.

According to some embodiments, each of the plurality of spatially oscillating interference patterns may be arranged at a separate position along a predetermined trajectory. The sample may be arranged to move along this trajectory while the plurality of spatially oscillating interference patterns are applied thereto. Alternatively, the sample may be stationary while a series of patterns are applied thereto simultaneously. It is an advantage to have several patterns applied simultaneously onto the sample as the entire sample is interrogated at the same time, yielding the output signals from the whole sample without using a camera for detection. This enables the apparatus to provide a higher output signal per scanning time, compared to other imaging techniques.

According to some embodiments, the sample may be arranged in a capillary. The sample may be caused to move along the capillary by capillary action. Alternatively, the sample may be caused to move by different pressures applied at two ends of the capillary, the capillary having a first end for inserting the sample and a second end for draining the sample. This setup, allows to quickly image multiple samples (e.g. cells) by moving them at a constant rate through the probe volume, which may be a series of different patterns organized along the length of the capillary.

According to some embodiments, the plurality of output signals are generated by electromagnetic radiation scattered from the sample or by fluorescence or by other types of radiation. It is an advantage of the apparatus to utilize various types of output signals, such as scattered and fluorescence radiation as it may make the apparatus compatible with both fluorescence-labeled and unlabeled samples.

According to some embodiments, the first and second electromagnetic radiation beams may be light beams originating from, e.g. a monochromatic laser source. In this case, the at least one detector is typically a photodetector.

According to a second aspect there is provided a method for generating an image of a sample, the method comprising the steps of:
- generating a first and a second electromagnetic radiation beam;
- intersecting the first and a second electromagnetic radiation beam and spatially manipulating at least one of the first and second beams to create a plurality of spatially oscillating interference patterns;
- sequentially projecting the plurality of spatially oscillating interference patterns onto the sample;
- detecting, by at least one detector, a plurality of output signals generated from the plurality of spatially oscillating interference patterns projected onto the sample; and
- generating the image based on the output signals detected by the photodetector and the known shape of the projected spatially oscillating interference patterns.

Spatial manipulation of at least one of the first and second beams may be performed by galvanometer scanning and/or rotating mirrors, or by acousto-optic deflectors, or by electro-optic deflectors, or the like. Spatial manipulation of the interference pattern may also be performed by delaying the phase of one beam relative to the other. This may be done using moving mirrors, or phase retarders, or acousto-optics, or electro-optic phase modulators, or the like. This may also be done by delaying emission from one source of electromagnetic radiation relative to another, in cases where at least two sources of electromagnetic radiation are used to probe the sample. Namely, a predefined electrical signal may be applied to the mirrors/deflectors/modulators/sources of electromagnetic radiation. These electrical signals may also be used in the image reconstruction. Namely, the image may be generated, additionally based on a predetermined electrical signal applied to beams-managing elements to thereby spatially manipulate the beams.

According to a third aspect there is provided a method for generating an image of a sample, the method comprising the steps of:
- generating a first and a second electromagnetic radiation beam;
- creating a continuous motion of the sample along a predetermined trajectory;
- intersecting the first and a second electromagnetic radiation beam and spatially manipulating at least one of the first and second beams to thereby create a plurality of spatially oscillating interference patterns;
- sequentially projecting the plurality of spatially oscillating interference patterns onto the moving sample;
- simultaneously projecting the plurality of spatially oscillating patterns at different positions along the trajectory, and reading out a signal from each pattern, as the sample traverses the pattern,
- detecting, by at least one detector, a plurality of output signals generated from the plurality of spatially oscillating interference patterns projected onto the moving sample;
- generating the image based on the output signals detected by the at least one detector, the known shape of the projected, spatially oscillating, interference patterns, and the known trajectory of the sample.

According to this aspect, all the patterns may be projected at the same time, i.e. simultaneously, but at different positions along the trajectory, e.g. a capillary. A signal for each pattern may be recorded, as the sample traverses each pattern. This enables parallelization, i.e. a first particle can travel through a first pattern at the same time as a second particle travels through a second pattern, and at the same time as a number of other particles travel through a number of other patterns. Such imaging is advantageous as it has an improved imaging speed. In particular, such imaging is faster compared to camera-based imaging, which only allows to collect signal from one (or a few) particle at any given moment in time. Hence, according to this aspect a plurality of different patterns may be projected at the same time. The plurality of different patterns created at the same time may be generated from the two initial beams which are further split and/or duplicated by beam-manipulators. It can be advantageous to project a plurality of different patterns along the trajectory and also modulate each of these patterns continuously, for example it can be advantageous to imprint a series of sinusoidal patterns with varying frequency and direction along the length of the capillary, while modulating the phase of these sinusoidal pattern continuously as samples (e.g. flowing cells in a capillary) traverse the patterns.

Effects and features of the second and third aspects are to a large extent analogous to those described above in connection with the first aspect. Embodiments mentioned in relation to the first aspect are largely compatible and applicable to the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1a), figure 1b), and figure 1c) show three examples of an apparatus for obtaining an image of a sample.
Figure 2 shows different spatially oscillating interference patterns.
Figure 3 shows acquisition of one spatial frequency component of a sample.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

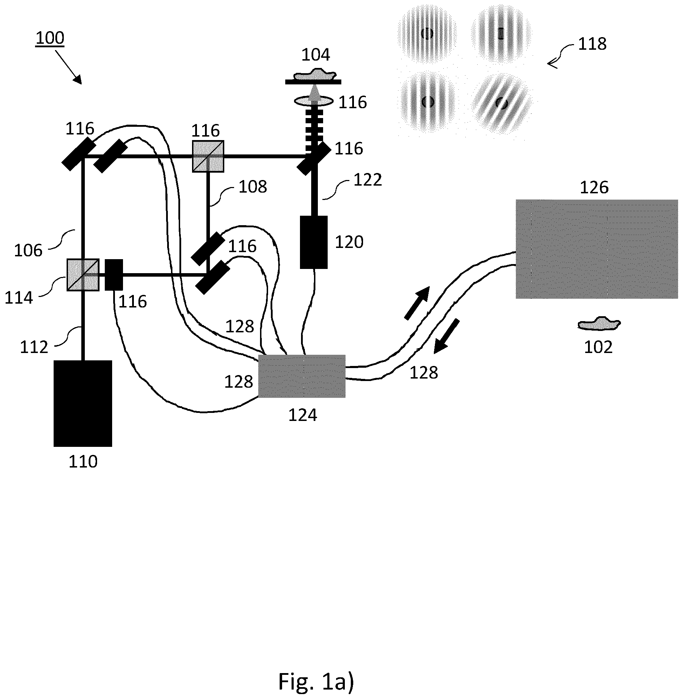

Figure 1a) shows an apparatus 100 for obtaining an image 102 of a sample 104. The apparatus comprises a first EM radiation beam 106 and a second EM radiation beam 108. The first and second beams may be generated from a single source 110. Alternatively, the two beams may be generated by two identical sources of electromagnetic radiation. The beams 106, 108 may be generated by splitting the source beam 112 by a beam splitter 114. The apparatus 100 further comprises beams-managing elements 116 which are configured to guide the two electromagnetic radiation beams 106, 108 and to direct them onto the sample 104. The beams-managing elements 116 may be arranged such that the two electromagnetic radiation beams 106, 108 create a plurality of spatially oscillating interference patterns 118 at the sample 104. The apparatus 100 comprises at least one detector 120 configured to detect an output signal 122 emitted from the sample 104. The detector may be a single element detector. The apparatus 100 is configured for projecting the plurality of spatially oscillating interference patterns 118 onto the sample 104 by repositioning of the first 106 and/or the second EM radiation beam 108 with respect to each other by use of the beams-managing elements 116. The beams-managing elements 116 responsible for beam repositioning and/or phase-shifting may be scanning mirrors and/or phase-modulators. These beams-managing elements 116 may be controlled by a controller 124, which in turn may include driver electronics. Each of the plurality of spatially oscillating interference patterns 118 may be applied sequentially, i.e. one after another, and may result in a sequence of corresponding output signals 122 detected by the detector 120. The apparatus 100 is then configured for obtaining the image 102 based on the plurality of the output signals 122. The output signals may be sent to and then processed by a signal processing unit 126. The signal processing unit may base the image on both the output signals 122 and control signals 128 generated by the controller 124. The control signals 128 may be translated into shape of the projected spatially oscillating interference patterns 118. The signal processing unit 126 may be configured for reconstructing the image by use of Fourier theory. The image may be a two-dimensional projection or a three-dimensional reconstruction.

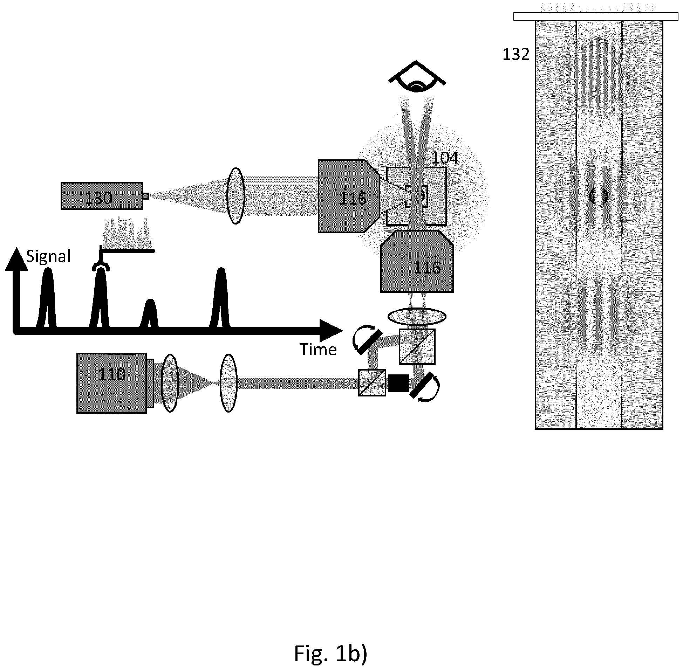

Figure 1b) shows an embodiment of an apparatus for obtaining an image. This apparatus differs from the one shown in Figure 1a) in that the sample may be arranged to move while the plurality of spatially oscillating interference patterns are applied thereto. The sample may continuously move with a constant speed along a predetermined path. The beams-managing elements may be configured to split one source beam into multiple coherent beam-pairs which may then generate different interference patterns simultaneously. One or more objectives may be used to project the beams and form the patterns onto the sample. Also the apparatus of Figure 1b) may comprise a line-array of detectors 130 configured to capture output signals along one axis (the axis of motion) emitted from the sample when the sample is simultaneously exposed to a plurality of interference patterns 132. In this scenario, each of the plurality of spatially oscillating interference patterns 132 may simultaneously as well as sequentially be projected at a separate position along a predetermined trajectory. The phase of each spatially oscillating pattern may be continuously swept (by phase-shifting one of the input beams relative to the other, using, for example, a phase-modulator), thus, effectively scrolling the pattern across the sample as each pattern is traversed. The sample is then arranged to move along this trajectory while the plurality of spatially oscillating interference patterns 132 are applied thereto. The sample may be arranged in a capillary. In this case, the image may be generated based on the output signals detected by the line-array of detectors 130, the known shape of the projected spatially oscillating interference patterns, and the known trajectory of the sample. The speed of the sample may also be taken into the calculation.

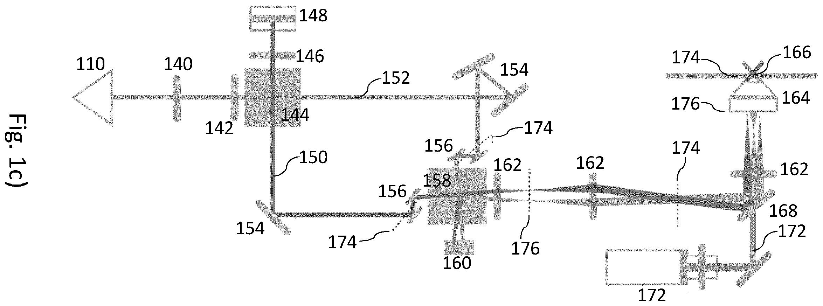

Figure 1c) shows an embodiment of an apparatus for obtaining an image. This apparatus differs from the one shown in Figure 1a) by including some further exemplification of how different optical elements may be used to modulate and direct two beams onto the sample. Light from the source, 110, is polarized by a linear polarizer, 140, then the angle of polarization is rotated to about 45 degrees using a half-wave plate, 142. Thus, about half the light is passed directly through a polarizing beam splitter 144, while the other half is reflected through a quarter-wave plate, 146, and then reflected by a mirror on a piezo-actuator, 148, thus sending the light back through the quarter-wave plate and polarizing beam splitter. This produces two beams of equal intensity and polarization, 150 and 152, of which the phase of one beam may be delayed relative to the other by moving the mirror on the piezo-actuator, 148. Mirrors, 154, in the two beam paths ensure that the optical path-length from the source, 110, to the sample, 166, is near-equal, thus ensuring that the beams will interfere coherently at the sample, even if a source, 110, with a short coherence length is used. A pair of scanning mirrors in each beam, 156, control the angle of the beams in two dimensions. A 50:50 beam-splitter, 158, is used to recombine the beams, while (for this particular example) dumping 50% of the light in a beam-dump, 160. Lenses, 162, and an objective, 164, direct the beams onto the sample, 166, while a dichroic mirror, 168, separates probe light (the two beams) from output signal, e.g. fluorescence, 170, which is ultimately directed onto a detector, 172. The detector may be positioned much closer to the sample than shown here. Sample-conjugate planes, 174, and objective pupil-conjugate planes, 176, are shown with dashed lines.

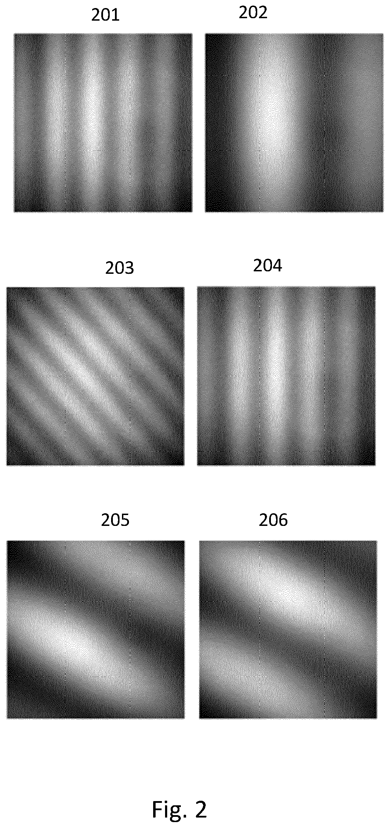

Figure 2 shows different spatially oscillating interference patterns, 201, 202, 203, 204, 205, 206 that may be imprinted onto the sample. The two interference patterns 201 and 204 are identical. The six images of patterns are intended to explain the concepts of frequency, orientation (direction), and phase in 2D sinusoidal patterns. The spatially oscillating interference patterns 201 and 202 differ from each other in spatial frequency. The spatially oscillating interference patterns 203 and 204 differ from each other in orientation in space. The spatially oscillating interference patterns 205 and 206 differ from each other in phase. The spatially oscillating interference patterns may also differ from each other in amplitude. Each of the spatially oscillating interference patterns 201-206 may be created by adjusting of the beams-managing elements and thereby changing an overlap angle or relative phase between the first and the second beam at the stationary image position.

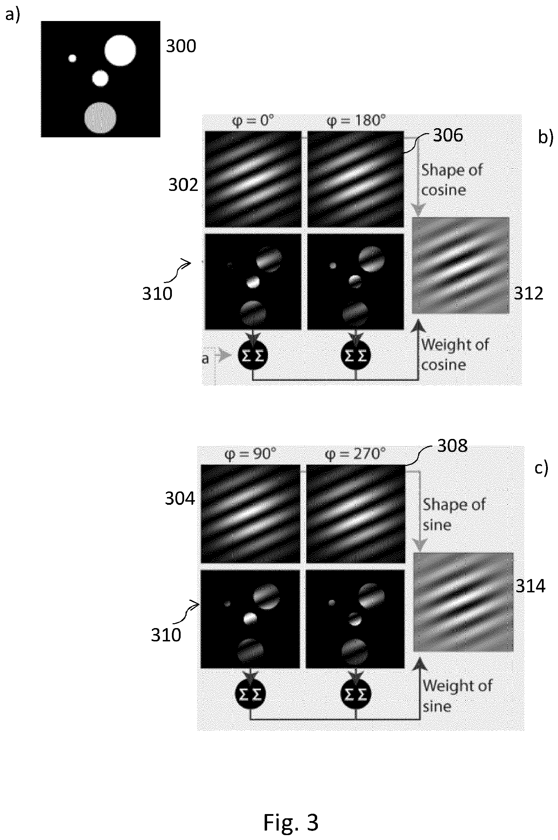

Figure 3 shows acquisition of one spatial frequency component of a sample 300. Figure 3a) illustrates a distribution of markers or scatterers in the sample 300. The signal processing unit may be configured for reconstructing the image by leveraging that the weight of a spatially oscillating interference probe patterns 302 and 304 across the sample 300 when building an image in Fourier space is determined by subtracting the signal acquired from one spatially oscillating interference pattern from the signal acquired from a 180-degree phase-shifted spatially oscillating interference patterns 306 and 308, respectively. Corresponding signals 310 from the sample are shown below the probe patterns. A Fourier transformation decomposes an image into frequency components. Each frequency component is described by a cosine 312 and sine 314 wave. Figure 3 illustrates how the weights of these two waves are estimated based on recordings from a single element detector, which only reads the accumulated signal for each of the four exposures 302, 304, 306, 308. To reconstruct an image, the cosine/sine weights of a plurality of probe patterns may be determined and the shape of the probe patterns may be required.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. An apparatus for obtaining an image of a sample , the apparatus comprising:
- a first and a second electromagnetic radiation beam;
- beams-managing elements configured to guide the two electromagnetic radiation beams and to direct them onto the sample, the beams-managing elements being arranged such that the two electromagnetic radiation beams create a spatially oscillating interference pattern at the sample;
- at least one detector configured to detect an output signal emitted from the sample;
wherein the apparatus is configured for projecting a plurality of spatially oscillating interference patterns onto the sample by repositioning and/or phase-shifting the first and/or the second electromagnetic radiation beam with respect to each other, and
wherein each of the plurality of spatially oscillating interference patterns results in a corresponding output signal, and wherein the apparatus is configured for obtaining the image based on the plurality of the output signals.

2. The apparatus according to claim 1, wherein the first and the second beam are generated by splitting electromagnetic radiation from a single source, or by two identical sources of electromagnetic radiation.

3. The apparatus according to claim 1 or 2, wherein the spatially oscillating interference patterns differ from each other in at least one parameter, the parameter being selected from a list of spatial frequency, phase, amplitude, and orientation in space.

4. The apparatus according to any of the preceding claims, wherein the at least one detector is a single element detector.

5. The apparatus according to any of the preceding claims, wherein the image is a two-dimensional projection or a three-dimensional reconstruction.

6. The apparatus according to any of the preceding claims, wherein the apparatus is configured for sending the detected signals to a signal processing unit, and wherein the signal processing unit is configured for reconstructing the image by use of Fourier theory.

7. The apparatus according to claim 6, wherein the signal processing unit is configured for reconstructing the image by leveraging that the weight of a spatially oscillating interference pattern across the sample is determined by subtracting the signal acquired from one spatially oscillating interference pattern from the signal acquired from a 180-degree phase-shifted spatially oscillating interference pattern.

8. The apparatus according to any of the preceding claims, wherein the apparatus comprises a line-array of detectors configured to capture output signals along one imaging axis.

9. The apparatus according to any of the preceding claims, wherein each of the plurality of spatially oscillating interference patterns is arranged to overlap at a stationary image position, and wherein the repositioning and/or adjustment of the beams-managing elements changes an overlap angle and/or relative phase between the first and/or the second electromagnetic radiation beam at the stationary image position, thereby creating the plurality of interference patterns at the stationary image position.

10. The apparatus according to any of the preceding claims, wherein the sample is arranged to move while the plurality of spatially oscillating interference patterns are applied thereto.

11. The apparatus according to any of the preceding claims, wherein each of the plurality of spatially oscillating interference patterns is arranged at a separate position along a predetermined trajectory, and wherein the sample is arranged to move along this trajectory while the plurality of spatially oscillating interference patterns are applied thereto.

12. The apparatus according to any of the claims 10 or 11, wherein the sample is arranged in a capillary, and wherein the sample is caused to move along the capillary or by different pressures applied at the two ends of the capillary or by capillary action.

13. The apparatus according to any of the preceding claims, wherein the plurality of output signals are generated by electromagnetic radiation scattered from the sample or by fluorescence or by other types of radiation.

14. The apparatus according to any of the preceding claims, wherein the first and second electromagnetic radiation beams are light beams and wherein the at least one detector is a photodetector.

15. A method for generating an image of a sample, the method comprising the steps of:
- generating a first and a second electromagnetic radiation beam;
- intersecting the first and a second electromagnetic radiation beam and spatially manipulating at least one of the first and second beams to create a plurality of spatially oscillating interference patterns;
- sequentially projecting the plurality of spatially oscillating interference patterns onto the sample;
- detecting, by at least one detector, a plurality of output signals generated from the plurality of spatially oscillating interference patterns projected onto the sample;
- generating the image based on (1) the output signals detected by the photodetector and (2) the known shape of the projected spatially oscillating interference patterns.

16. A method for generating an image of a sample, the method comprising the steps of: - generating a first and a second electromagnetic radiation beam;
- creating a continuous motion of the sample along a predetermined trajectory;
- intersecting the first and a second electromagnetic radiation beam and spatially manipulating at least one of the first and second beams to thereby create a plurality of spatially oscillating interference patterns;
- sequentially projecting the plurality of spatially oscillating interference patterns onto the moving sample;
- simultaneously projecting the plurality of spatially oscillating patterns at different positions along the trajectory, and reading out a signal from each pattern, as the sample traverses the pattern;
- detecting, by at least one detector, a plurality of output signals generated from the plurality of spatially oscillating interference patterns projected onto the moving sample;
- generating the image based on (1) the output signals detected by the at least one detector, (2) the known shape of the projected, spatially oscillating, interference patterns, and (3) the known trajectory of the sample.
